Europäisches Patentamt

European Patent Office

Office européen des brevets

(11) Publication number: **0 333 041**
**A1**

# EUROPEAN PATENT APPLICATION

(21) Application number: 89104215.2

(22) Date of filing: 09.03.89

(51) Int. Cl.4: **C01G 25/00 , C04B 35/48**

(30) Priority: 11.03.88 JP 55977/88

(43) Date of publication of application:
20.09.89 Bulletin 89/38

(84) Designated Contracting States:
DE FR

(71) Applicant: Tosoh Corporation
No. 4560, Oaza-tonda
Shin-nanyo-shi Yamaguchi-ken(JP)

(72) Inventor: Nagata, Hiroya
No. 7-3, Tachibana-dai 2-chome Midori-ku
Yokohama-shi Kanagawa-ken(JP)
Inventor: Yamamura, Hiroshi
No. 2-304, Tsutsujigaoka 2-chome Midori-ku
Yokohama-shi Kanagawa-ken(JP)

(74) Representative: Vossius & Partner
Siebertstrasse 4 P.O. Box 86 07 67
D-8000 München 86(DE)

(54) Method of producing a lithium zirconate powder.

(57) A method of producing a lithium zirconate powder is disclosed, which is characterized in that a gel-like zirconium compound obtained by hydrolyzing or neutralizing an aqueous solution of a zirconium salt is mixed with an aqueous solution of a lithium salt and the mixture is dehydrated, temporarily burned and pulverized.

EP 0 333 041 A1

## METHOD OF PRODUCING A LITHIUM ZIRCONATE POWDER

The present invention relates to a method of producing a lithium zirconate ($Li_2ZrO_3$) powder useful as an intermediate for producing sintered articles etc. of lithium zirconate, which are the most promising candidates for tritium breeding materials used for the brancket of a nuclear fusion reactor.

A method is known for producing a powder to make a sintered article of lithium zirconate, wherein a solid-phase reaction as shown by the following equation is performed by the temporary burning of the mixture of lithium carbonate with zirconium oxide.

$Li_2CO_3 + ZRO_2 \rightarrow Li_2ZRO_3 + CO_2 \uparrow$

With this method, however, it is difficult to obtain a homogeneous powder since the reaction tends to become nonuniform. The inhomogeneous powder is poor in sinterability making it difficult to obtain a high-quality sintered article.

On the other hand, as a means to produce a homogeneous and fine-particulate powder, a method to burn a gel obtainable by the sol-gel method or the coprecipitation method is generally known. However, it is well known that it is very difficult to allow lithium compounds to precipitate as gels.

The inventors have succeeded in obtaining a homogeneous and highly-sinterable powder of lithium zirconate by mixing a gel-like zirconium compound obtained by hydrolyzing or neutralizing an aqueous solution of a zirconium salt with an aqueous solution of a lithium salt and by dehydrating, temporarily burning and pulverizing the mixture.

In the following, details of the invention will be illustrated.

The gel-like zirconium compound to be used for the production of the powder of lithium zirconate can be obtained by filtering and washing the white powder obtainable by boiling an aqueous solution of zirconyl chloride, zirconium chloride, zirconium nitrate, etc. with water and hydrolizing or neutralizing it with aqueous ammonia etc.

With respect to the aqueous solutions of lithium salts as the other raw material it is desirable to use lithium salts such as lithium chloride, lithium nitrate, etc. having high solubility, since the higher the concentration in terms of lithium, the easier the dehydration takes place. Of course, it must be avoided to use such salts that contain elements besides lithium and oxygen, which are not volatilized completely by the temporary burning, since the objective substance to be obtained after the temporary burning is lithium zirconate represented by $Li_2ZrO_3$. For example, lithium salts of organic acids cannot be said to be a desirable raw material since they leave behind traces of carbon after the temporary burning. The mixing ratio of the aqueous solution of the lithium salt to the gel-like zirconium compound is preferably 2.1 - 2.4 : 1 in terms of Li : Zr gram atomic ratio, that is, higher than the stoichiometric composition of 2 : 1. This is because one cannot avoid volatilization of lithium oxide during the temporary burning and, if said ratio is too high, the lithium oxide volatilization must be promoted.

The gel-like zirconium compound is first added to the aqueous solution of the lithium salt and the mixture is stirred preferably for 15 to 20 hours to achieve sufficient mixing. Then it is preferred to complete dehydration by adding alcohols such as n-butanol, octanol, etc. and by creating an azeotropic mixture. The temporary burning may usually be performed by keeping the mixture at 900 to 1100°C for 1 to 6 hours in air. The desirable Li : Zr ratio for these raw materials depends on the burning conditions and the structure of the reaction vessel. For example, when the Li : Zr gram atomic ratio is close to 2.1, the reaction vessel should have a double structure to suppress the volatilization of lithium oxide. The coarse powder obtained by the temporary burning is then finally pulverized by using a ball mill etc. to obtain the objective powder of lithium zirconate.

The powder obtained as above is molded with a metal mold press, rubber press or the like, and the molded article is buried in said powder and kept at 1200 to 1500°C for 0.5 to 4 hours in air. Thereby the sintered article can be obtained.

The tritium breeding material does not usually improve as the relative density becomes higher and a range of, for example, 84 to 86% is usually suitable. Upon sintering the powder of lithium zirconate of the invention, it is possible to obtain the sintered article with the desired density not confined to said range by controlling the sintering temperature etc.

When producing the powder of lithium zirconate, it is very important to uniformly mix the raw materials. Since the gel-like zirconium compound has a very large surface area and has the property of adsorbing alkali metal ions well, it is assumed that the lithium ions in the aqueous solution used for the immersion are easily adsorbed in the gel and are dispersed uniformly in the gel. Because of this uniformity, both the lithium zirconate powder finally obtained and the sintered article produced from this powder are considered to uniform in their composition. If $Li_2O$ and $ZrO_2$ exist locally in excess relative to $Li_2ZrO_3$ ($Li_2O$ $ZrO_2$) in

the sintered article, the thermal properties such as thermal expansivity etc. become partially unstable and there is a danger of crack formation upon heating or cooling. With the sintered article produced from the powder obtained according to the invention, there is no such danger because of the uniform composition.

Moreover, when formulating the raw materials in the ratio of their stoichiometric composition, the lithium fraction is volatilized during the temporary burning leaving an excess of the zirconium fraction which forms monoclinic zirconia. However, when adding the lithium fraction in excess when formulating the raw materials, it is assumed that excess lithium oxide is vaporized during the temporary burning and in the remaining mixture of raw materials the evaporation of the additional lithium fraction is suppressed, whereby the production of single component lithium zirconate becomes possible.

## Example

A powder of commercial zirconyl chloride anhydride was dissolved at a rate of 300 g per 1 liter of water. To this aqueous ammonia was added to adjust the pH to 7 and to produce the precipitate of a gel-like zirconyl hydroxide hydrate, which was filtered and washed with water. Commercial lithium carbonate powder containing 2.2 gram atoms of lithium per 1 gram atom of zirconium of said precipitate was dissolved in nitric acid and the excess nitric acid was neutralized with aqueous ammonia to adjust the pH to 7 and to prepare an aqueous solution of lithium nitrate. Said precipitate washed out with water, was immersed into said aqueous solution of lithium nitrate, which was stirred for 15 hours. Next, n-butanol was added to accomplish dehydration under azeotropic conditions and then the mixture was dried. It was then temporarily burned in a double structure reaction vessel by keeping the temperature at 1000°C for 4 hours in air. The temporarily burned product thus obtained was pulverized for 24 hours in a ball mill using ethanol as a solvent and dried to obtain the powder. This powder was identified by means of X-ray diffraction as being single component lithium zirconate.

A part of this powder was molded into a pellet with a diameter of 15 mm and a thickness of 10 mm under a pressure of 2 tons/cm². The pellet was immersed in part in the remaining powder and allowed to sinter by keeping in at temperatures shown in the following table for 1 hour in air. As a result, homogeneous white sintered articles with a relative density of 75 to 90% of the theoretical density were obtained as shown in following table. These sintered articles were also identified by means of X-ray diffraction as being single component lithium zirconate.

| Sintering temperature °C | Relative sintered density % |
|---|---|
| 1250 | 75 |
| 1400 | 80 |
| 1500 | 90 |

## Claims

1) A method of producing lithium zirconate powder characterized in that a gel-like zirconium compound obtained by hydrolyzing or neutralizing an aqueous solution of a zirconium salt is mixed with an aqueous solution of a lithium salt and the mixture is dehydrated, temporarily burned and pulverized.

2) The method of producing lithium zirconate powder according to Claim 1, wherein the quantitative ratio of the aqueous solution of the lithium salt to the gel-like zirconium compound is 2.1 - 2.4 : 1 in terms of the Li : Zr gram atomic ratio.

3) A tritium breeding material characterized in that it is a sintered article made by press molding the powder of lithium zirconate obtainable according to Claim 1 and by sintering this molded article after immersing it in said powder.

4) A method of producing tritium breeding material characterized in that, upon press molding the powder of lithium zirconate obtainable according to Claim 1 the molded article is sintered after immersing it in said powder, the sintering temperature being controlled to obtain a sintered article with the desired density.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | JOURNAL OF NUCLEAR MATERIALS, no. 103 & 104, 1981, pages 579-584, North-Holland Publishing Co.; D.J. SUITER et al: "Preparation of solid tritium breeding compounds for fusion reactors" * Page 581, paragraph 2.2 * --- | 1 | C 01 G 25/00 C 04 B 35/48 |
| A | CH-A- 475 161 (CIBA) * Column 5, example 3; column 6, claim 1 * --- | 1 | |
| A | CHEMICAL ABSTRACTS, vol. 105, no. 4, July 1986, pages 292-293, abstract no. 28734c, Columbus, Ohio, US; & JP-A-61 72 626 (TOYO SODA MFG CO. LTD) 14-04-1986 --- | | |
| A | CHEMICAL ABSTRACTS, vol. 107, no. 22, 30th November 1987, page 570, abstract no. 206840k, Columbus, Ohio, US; P. KENNEDY: "The preparation, characterization, and properties of lithium oxide and lithium meta-zirconate specimens irradiated in HFR Petten in the second and third exotic experiments", & COMM. EUR. COMMUNITIES, [REP.] EUR 1986, EUR 10936, FUSION TECHNOL. 1986, VOL. 2, 1013-18 ----- | | TECHNICAL FIELDS SEARCHED (Int. Cl.4) C 01 G C 04 B |

The present search report has been drawn up for all claims

| Place of search | Date of completion of the search | Examiner |
|---|---|---|
| THE HAGUE | 16-06-1989 | LIBBERECHT-VERBEECK E.M. |